# EUROPEAN PATENT APPLICATION

(11) **EP 4 321 288 A1**
(43) Date of publication of application: **14.02.2024**
(21) Application number: 23188426.3
(22) Date of filing: 28.07.2023
(51) Int. Cl.: B23D 49/12, B23D 51/14, B27B 27/02, B23D 51/01

(54) **HACKSAW**

(30) Priority: 11.08.2022 US 202217886226
(71) Applicant: Techtronic Cordless GP, Anderson, SC 29621 (US)
(72) Inventor: FAUSS, Trevor C., Anderson, 29621 (US); EVATT, Thomas, Anderson, 29621 (US)
(74) Representative: Meissner Bolte Partnerschaft mbB

(57) **Abstract**

A hacksaw (10) includes a handle (14) defining a pocket (74) shaped to receive a hacksaw blade (222) without a tang and a reciprocating blade (22) having a tang (46) and a hole (42). The hacksaw (10) further includes a support arm (18) extending from the handle (14) and a clamp mechanism (26) coupled to the support arm (18) and configured to hold the hacksaw blade (222) or the reciprocating blade (22) depending on which blade is coupled to the handle (14).

## Description

### TECHNICAL FIELD

The present disclosure relates to cutting tools, and more particularly to hacksaws or the like.

### BACKGROUND

Conventionally, hacksaws include a handle, a support arm extending from the handle, and a blade. The blade includes a first end that is supported by the handle and a second end opposite the first end that is supported by the support arm. Hacksaws are used to cut a number of different materials, such as plastics, woods, and metals.

### SUMMARY

In one independent aspect, a hacksaw includes a handle defining a pocket shaped to receive a hacksaw blade without a tang and a reciprocating blade having a tang and a hole. The hacksaw further includes a support arm extending from the handle and a clamp mechanism coupled to the support arm and configured to hold the hacksaw blade or the reciprocating blade depending on which blade is coupled to the handle.

In another independent aspect, a hacksaw includes a handle, a support arm extending from the handle and including a first end coupled to the handle and a second end defining a suspended support having a free end, and a clamp mechanism coupled to the suspended support adjacent the free end. The clamp mechanism includes an actuator and a clamp member pivotable relative to the suspended support by actuation of the actuator between a clamped state and an unclamped state to selectively clamp a blade supported by the handle.

In yet another independent aspect, a hacksaw includes a handle defining a longitudinal axis and including a pocket for receiving a blade. The pocket includes a longitudinal portion that extends through the handle along the longitudinal axis and a tang portion that extends from the longitudinal portion. The hacksaw further includes a support arm extending from the handle and a clamp mechanism configured to secure a blade to the hacksaw. The longitudinal portion of the pocket of the handle is defined by a first wall and a second wall, and the first wall is oriented at an oblique angle relative to the longitudinal axis.

Other features and aspects of the disclosure will become apparent by consideration of the detailed description and accompanying drawings.

### BRIEF DESCRIPTION OF THE DRAWINGS

FIG. 1A is a perspective view of a hacksaw embodying the disclosure.
FIG. 1B is another perspective view of the hacksaw of FIG. 1A.
FIG. 1C is an exploded view of the hacksaw of FIG. 1A.
FIG. 2 is a perspective view of a reciprocating blade of the hacksaw of FIG. 1A.
FIG. 3A is an enlarged perspective view of the hacksaw of FIG. 1A from the area labeled 3A-3A.
FIG. 3B is a perspective view of a clamp mechanism of the hacksaw of FIG. 1A.
FIG. 3C is an enlarged perspective view of a portion of a support arm of the hacksaw of FIG. 1A with the clamp mechanism removed.
FIG. 3D is a cross-section view of the hacksaw taken along line 3D-3D of FIG. 1B, illustrating the clamp mechanism in a clamped position.
FIG. 3E is a cross-section view of the hacksaw similar to FIG. 3D with the clamp mechanism in an unclamped position.
FIG. 4A is a cross-section view of the hacksaw of FIG. 1A taken along line 4A-4A with the blade removed.
FIG. 4B is an enlarged view of the hacksaw of FIG. 4A from the area labeled 4B-4B.
FIG. 5A is a cross-section view of the hacksaw of FIG. 1A taken along line 4A-4A.
FIG. 5B is a cross-section view of the hacksaw including a second reciprocating blade coupled to the hacksaw.
FIG. 5C is a cross-section view of the hacksaw including a standard hacksaw blade coupled to the hacksaw.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. Use of "including" and "comprising" and variations thereof as used herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

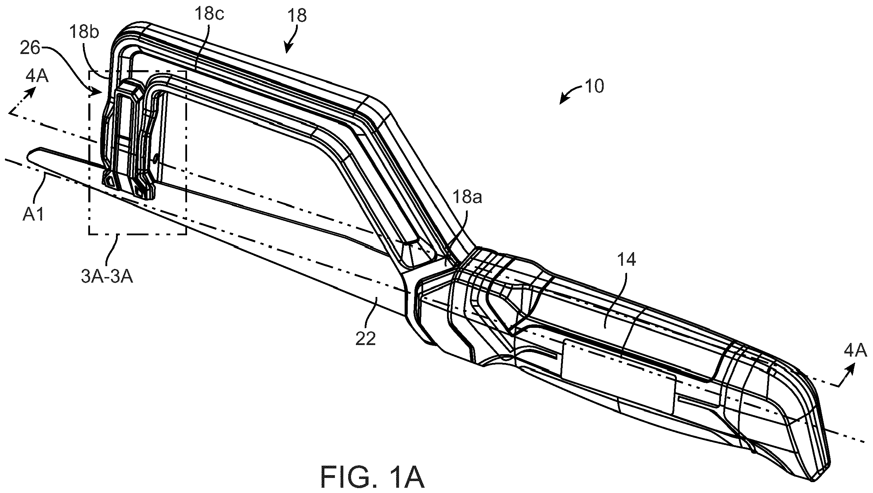

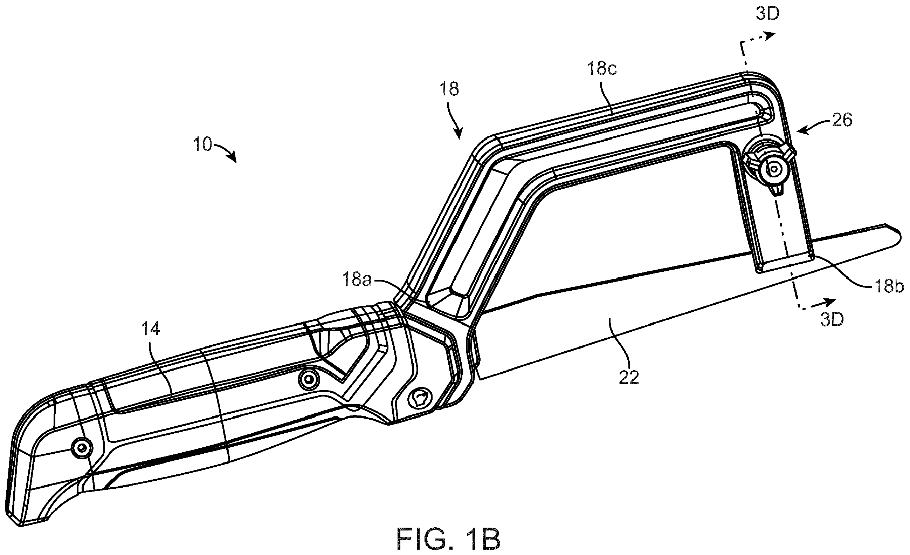

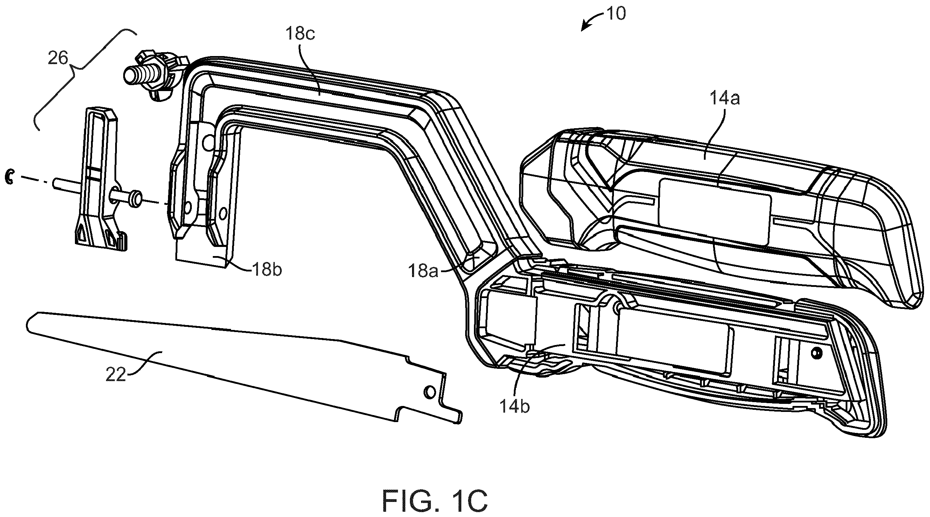

FIGS. 1A-1C illustrate a hacksaw 10 including a handle 14 that defines a longitudinal axis A1 and a support arm 18 that extends from the handle 14. The handle includes a grip 14a and a frame 14b. The support arm 18 includes a first end 18a that is coupled to the handle 14, a second or distal end 18b opposite the first end 18a, and a middle portion 18c extending between the first end 18a and the second end 18b. The frame 14b is formed integrally with the support arm 18, and the illustrated grip 14a may be over-molded with the frame 14b. In the illustrated embodiment, the support arm 18 is generally C-shaped such that the middle portion 18c is offset from and extends parallel to, or substantially parallel to, the longitudinal axis A1, and the second end 18b of the support arm 18 terminates adjacent or at the longitudinal axis A1. In the illustrated embodiment, the hacksaw 10 further includes a reciprocating blade 22 that is removably coupled to the handle 14 and the support arm 18. The reciprocating blade 22 includes a first end that is received within the handle 14 and a second end opposite the first end. A clamp mechanism 26 is coupled to the support arm 18 adjacent or at the second end 18b to selectively secure the second end of the reciprocating blade 22 to the support arm 18.

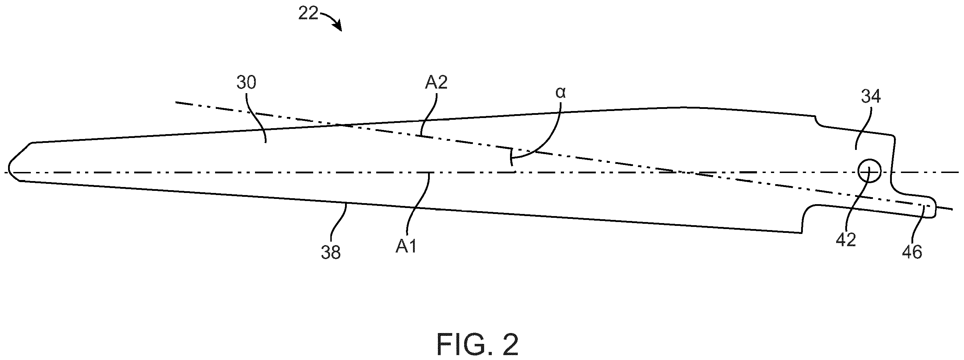

Referring to FIG. 2, the reciprocating blade 22 includes a cutting body 30 and an attachment portion 34 extending from the cutting body 30. The cutting body 30 includes a plurality of teeth that define a cutting edge 38 of the cutting body 30. The attachment portion 34 includes an aperture 42 and a tang 46 that defines a tang axis A2. When the reciprocating blade 22 is coupled to the handle 14 and the support arm 18, the tang axis A2 extends at an oblique angle α relative to the longitudinal axis A1.

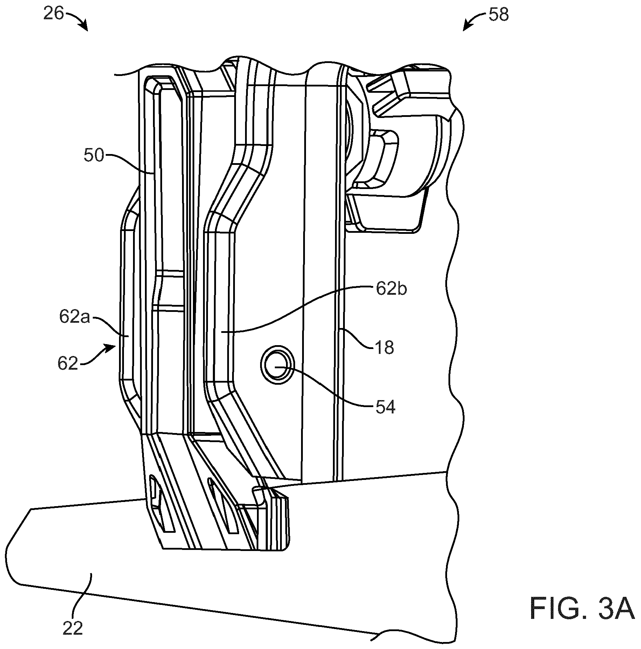

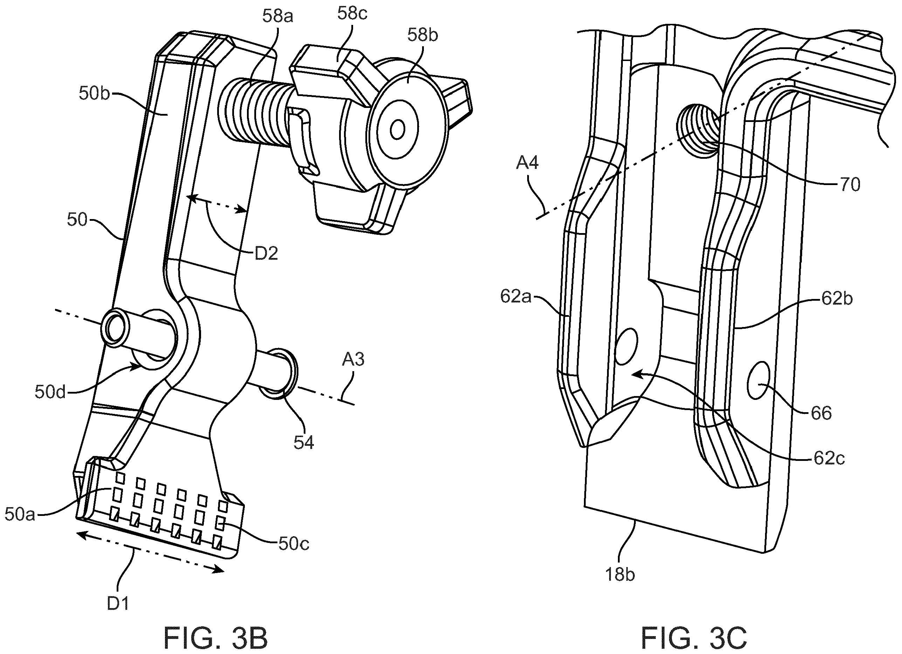

With reference to FIGS. 3A and 3B, the clamp mechanism 26 includes a clamp member 50, a pivot pin 54, and an actuator 58. The clamp member 50 includes a grip end 50a and a lever end 50b opposite the grip end 50a. The grip end 50a includes a width D1 that is wider in a dimension than a width D2 of the lever end 50b (and wider than any other portion of the clamp member 50). As shown in FIG. 3B, a plurality of protrusions 50c project from a face of the grip end 50a. The clamp member 50 further includes an aperture 50d that defines a pivot axis A3 of the clamp member 50. In the illustrated embodiment, the aperture 50d (and therefore the pivot axis A3) is closer to the grip end 50a than the lever end 50b. The pivot pin 54 extends through the aperture 50d, and the illustrated actuator 58 includes a screw or bolt 58a and a knob 58b that is coupled to the screw 58a (e.g., by molding or co-molding, etc.). The knob 58b includes at least one projecting portion 58c to facilitate manipulation and rotation of the actuator 58 by a user. In the illustrated embodiment, the knob 58b includes three projecting portions 58c.

With reference to FIGS. 3A and 3C, the support arm 18 of the hacksaw 10 includes a clamp support 62 that has a first rail 62a and a second rail 62b cooperatively defining a channel 62c. Each rail 62a, 62b includes a hole 66 that is parallel to the longitudinal axis A1 and that supports the pivot pin 54. The support arm 18 further includes a threaded hole 70 extending along an actuation axis A4 perpendicular to the longitudinal axis A1 and transverse to the channel 62c.

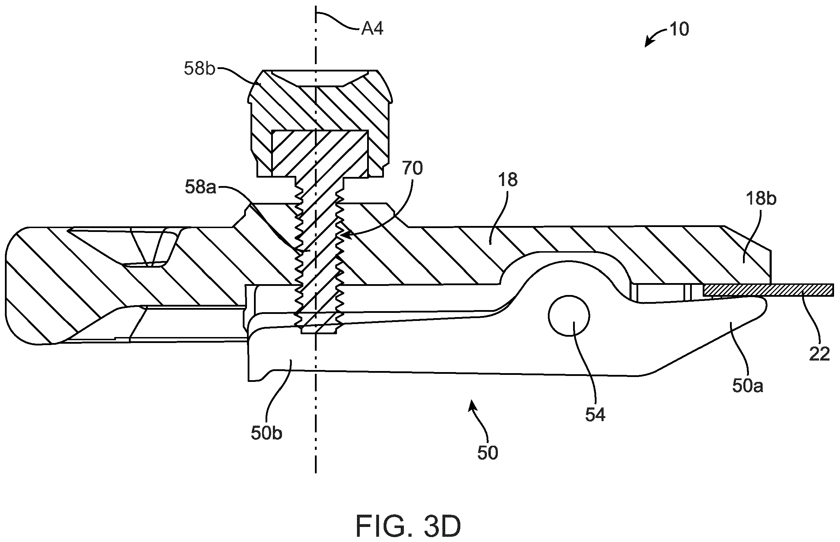

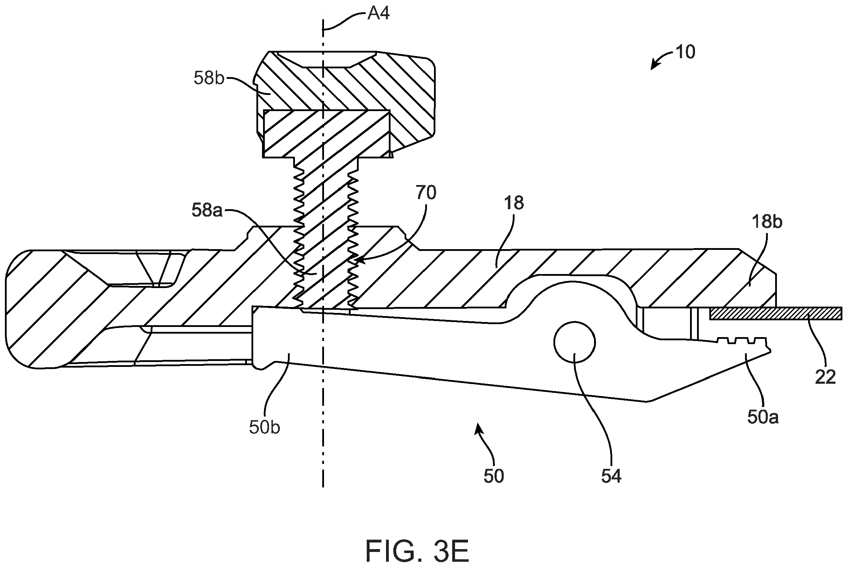

With reference to FIGS. 3A, 3D, and 3E, the clamp member 50 is disposed in the channel 62c of such that the grip end 50a terminates adjacent or at the second end 18b of the support arm 18 (below the rails 62a, 62b as viewed in FIG. 3A). The pivot pin 54 extends through the holes 66 of the rails 62a, 62b and the aperture 50d of the clamp member 50 such that the clamp member 50 can pivot relative to the support arm 18 about the pivot axis A3 between a clamped position (FIG. 3D) and an unclamped position (FIG. 3E). The screw 58a is threadably engaged with the threaded hole 70 of the support arm 18 such that the screw 58a is positioned to abut the lever end 50b of the clamp member 50. A user may rotate the knob 58b to move the screw 58a axially along the actuation axis A4 to pivot the clamp member 50 between the clamped position and the unclamped position. For example, rotation of the knob 58b clockwise moves the clamp member 50 toward the clamped position, and rotation of the knob 58b counterclockwise moves the clamp member 50 toward the unclamped position. When the clamp member 50 is in the unclamped position, the grip end 50a of the clamp member 50 is spaced from the second end 18b of the support arm 18 by a sufficient distance (i.e. a distance larger than the thickness of the blade 22 at the front end) to facilitate insertion or removal of the blade (i.e. the front of the blade is not secured by the clamp mechanism 26). When the clamp member 50 is in the clamped position, the grip end 50a is positioned in close proximity to the second end 18b of the support arm 18 (i.e. a distance that is about the same, or is the same, as the thickness of the blade at the front end) to clamp and secure the blade 22 between the grip end 50a of the clamp mechanism 26 and the second end 18b of the support arm 18. The protrusions 50c increase a clamp or grip strength between the reciprocating blade 22 and the grip end 50a.

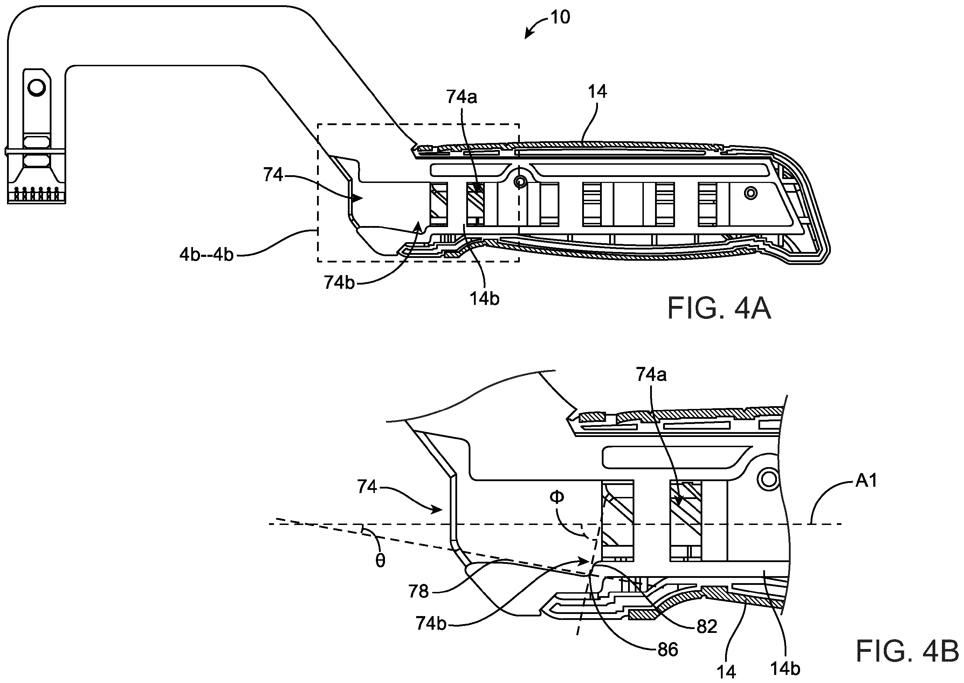

Referring to FIGS. 4A and 4B, the handle 14 includes a pocket 74 that is defined in the frame 14b and that is shaped to receive the attachment portion 34 of a selected blade 22. The pocket 74 includes a longitudinal portion 74a that extends through the handle 14 along the longitudinal axis A1 (e.g., through most of the handle 14), and a tang portion 74b that extends from the longitudinal portion 74a away from the longitudinal axis A1 (e.g., downward and rightward as viewed in FIGS. 4A, 4B). In the illustrated embodiment, and as best shown in FIG. 4B, the tang portion 74b is defined by a first wall 78 that is oriented at a first oblique wall angle θ relative to the longitudinal axis A1 and a second wall 82 that is oriented at a second oblique wall angle ϕ relative to the longitudinal axis A1. In some embodiments, the second wall 82 may be perpendicular to the longitudinal axis A1. The tang portion 74b may be partially defined by a chamfered surface 86 between the first wall 78 and the second wall 82.

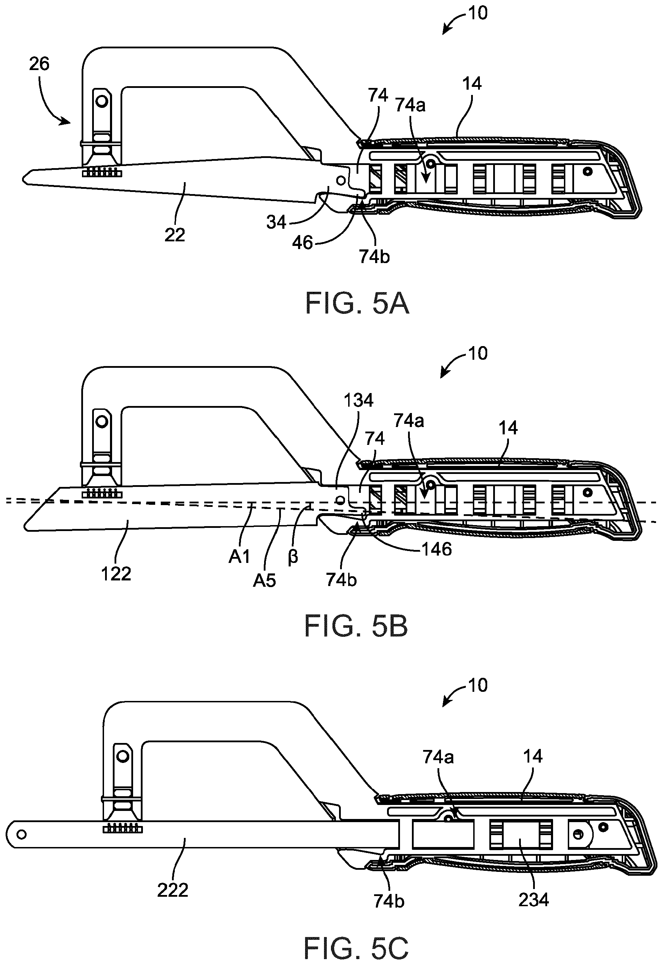

Referring to FIG. 5A, the attachment portion 34 of the reciprocating blade 22 is received within the pocket 74 when the reciprocating blade 22 is secured to the hacksaw 10 by the clamp mechanism 26. The tang 46 extends into the tang portion 74b. As is further illustrated in FIG. 5A, some reciprocating blades are not coupled to the hacksaw 10 by simply sliding the attachment portion of the reciprocating blade into the pocket 74. For example, the reciprocating blade 22 is coupled to the hacksaw 10 by sequentially sliding the attachment portion 34 into the pocket 74, pivoting the attachment portion 34 within the pocket 74 so that the tang 46 moves toward the tang portion 74b, and clamping the reciprocating blade 22 to the support arm 18 via the clamp mechanism 26

The tang portion 74b of the pocket 74 is sized to receive blade tangs that have varying sizes, shapes, and tang axes. Referring to FIG. 5B, the pocket 74 is sized to receive an attachment portion 134 of a second reciprocating blade 122 that includes a tang 146 with a second tang axis A5 extending at an angle β relative to the longitudinal axis A1. The angle β is different from the tang axis α, and the tang 146 is different from the shape or angle of the tang 46 of the blade 22. The pocket 74 shaped to accommodate different blades, including different reciprocating blades so that the hacksaw 10 can be used with blades that vary in both size and shape where the blades connect to the handle 14. As illustrated in in FIG. 5C, the pocket 74 is also sized to accommodate and couple a standard hacksaw blade 222 to the handle 14. As shown, the hacksaw blade 222 has an attachment portion 234 without a tang, and the hacksaw blade 222 extends farther into the longitudinal portion 74a of the pocket 74 than the reciprocating blades 22, 122. As such, the hacksaw 10 may be used with a variety of reciprocating blades and standard blades.

Although aspects have been described in detail with reference to certain embodiments, variations and modifications exist within the scope of one or more independent aspects as described.

## Claims

1. A hacksaw comprising:
a handle defining a pocket shaped to receive a blade selected from a hacksaw blade without a tang and a reciprocating blade having a tang and a hole; and
a support arm extending from the handle; and
a clamp mechanism coupled to the support arm and configured to hold the selected blade on the support arm.

2. The hacksaw of claim 1, wherein the support arm includes a clamp support disposed adjacent an end of the support arm, and the clamp mechanism is supported by the clamp support.

3. The hacksaw of either claim 1 or claim 2, wherein the handle defines a longitudinal axis, and wherein the pocket includes a longitudinal portion that extends along the longitudinal axis and a tang portion that extends from the longitudinal portion away from the longitudinal axis.

4. The hacksaw of claim 3, wherein the longitudinal portion extends through a majority of the handle

5. The hacksaw of claim 3, wherein the tang portion is defined by a first wall and a second wall, the first wall oriented at a first oblique angle relative to the longitudinal axis.

6. The hacksaw of claim 5, wherein one or more of:
a) the second wall is oriented at a second oblique angle relative to the longitudinal axis; and/or
b) the second wall is oriented perpendicular to the longitudinal axis, and/or
c) the tang portion is further defined by a chamfered surface between the first wall and the second wall.

7. The hacksaw of any one of the preceding claims, wherein the pocket is shaped to separately receive different reciprocating blade tangs.

8. A hacksaw comprising:
a handle;
a support arm extending from the handle and including a first end coupled to the handle and a second end defining a suspended support having a free end; and
a clamp mechanism coupled to the suspended support adjacent the free end, the clamp mechanism including an actuator and a clamp member pivotable relative to the suspended support by actuation of the actuator between a clamped state and an unclamped state to selectively clamp a blade to the support arm.

9. The hacksaw of claim 8, wherein the handle includes a frame and a grip, the frame being integral with the support arm and the grip being over-molded with the frame.

10. The hacksaw of either claim 8 or claim 9, wherein the suspended support includes a hole and the clamp mechanism further includes a pivot pin that extends through the hole.

11. The hacksaw of any one of claims 8 to 10, wherein the clamp member includes a lever end abutting the actuator, a grip end opposite the lever end that is configured to clamp the blade, and an aperture between the lever end and the grip end that defines a pivot axis, wherein preferably the grip end includes a plurality of protrusions that increase a hold strength of the clamp mechanism, and/or a first width that is greater than a second width of the lever end.

12. The hacksaw of any of claims 8 to 11, wherein the support arm further includes a threaded hole, and wherein the actuator includes a screw threadably engaged with the threaded hole and a knob coupled to the screw, and wherein the knob rotatable by a user to move the actuator axially along an actuation axis.

13. A hacksaw comprising:
a handle defining a longitudinal axis and including a pocket configured to support a selected blade, the pocket including a longitudinal portion that extends through the handle along the longitudinal axis and a tang portion that extends from the longitudinal portion;
a support arm extending from the handle; and
a clamp mechanism configured to secure a blade to the hacksaw,
wherein the longitudinal portion is defined by a first wall and a second wall, and
wherein the first wall is oriented at an oblique angle relative to the longitudinal axis.

14. The hacksaw of claim 13, wherein the pocket is sized to support a reciprocating blade including an attachment portion having a tang, and wherein the reciprocating blade is coupled to the hacksaw by sequentially sliding the attachment portion into the pocket and then pivoting the reciprocating blade within the pocket.

15. The hacksaw of either claim 13 or claim 14, wherein the pocket shaped to separately support a standard hacksaw blade and reciprocating blades having differing attachment portions, the clamp mechanism preferably including an actuator and a clamp member pivotable relative to the support arm to secure the selected blade to the support arm.
